# EUROPÄISCHE PATENTANMELDUNG

(11) **EP 3 138 942 A1**
(43) Veröffentlichungstag der Anmeldung: **08.03.2017**
(21) Anmeldenummer: 16187111.6
(22) Anmeldetag: 02.09.2016
(51) Int. Cl.: D01H 4/32

(54) **GARNITURTRÄGER FÜR EINE AUFLÖSEWALZE MIT TEILEN EINER SICHERUNGSEINRICHTUNG FÜR EINEN DREHVERSCHLUSS UND AUFLÖSEWALZE MIT EINER SICHERUNGSEINRICHTUNG FÜR EINEN DREHVERSCHLUSS**

(30) Priorität: 04.09.2015 DE 102015114872
(71) Anmelder: Rieter Ingolstadt GmbH, 85055 Ingolstadt (DE)
(72) Erfinder: SCHERMER, Josef, 86673 Bergheim-Unterstall (DE)
(74) Vertreter: Bergmeier, Werner

(57) **Zusammenfassung**

Ein Garniturträger (3) für eine Auflösewalze (1) einer Offenendspinnvorrichtung weist wenigstens einen Teil eines mehrere Stellungen aufweisenden Drehverschlusses (8) auf, mittels welchem der Garniturträger (3) lösbar an einem mit einer Antriebswelle (6) fest verbundenen Grundkörper (2) der Auflösewalze (1) befestigbar ist. Weiterhin weist der Garniturträger (3) wenigstens einen Teil einer Sicherungseinrichtung (7) auf. Die Sicherungseinrichtung (7) beinhaltet ein mit dem Garniturträger (3) verbundenes Deckelelement (15), mittels welchem zumindest eine der Stellungen des Drehverschlusses (8) anzeigbar ist und/oder mittels welchem der Garniturträger (3) gegen unbeabsichtigtes Lösen vom Grundkörper (2) sicherbar ist. Eine Auflösewalze (1) weist einen mit einer Antriebswelle (6) fest verbundenen Grundkörper (2) und einen mittels eines Drehverschlusses (8) lösbar mit dem Grundkörper (2) verbundenen Garniturträger (3) auf, wobei der Drehverschluss (8) mehrere Stellungen aufweist und durch Drehen des Garniturträgers (3) relativ zu dem Grundkörper (2) um eine gemeinsame Drehachse (A) aus einer Entriegelungsstellung (I) über eine Verbindungsstellung (II) in eine Verriegelungsstellung (III) und zurück überführbar ist. Der Drehverschluss (8) umfasst zumindest eine Sicherungseinrichtung (7), die ein mit dem Garniturträger (3) verbundenes Deckelelement (15) beinhaltet, welches zumindest in der Verbindungsstellung (II) die Stellung des Drehverschlusses (8) anzeigt und/oder welches zumindest in der Verbindungsstellung (II) den Garniturträger (3) gegen unbeabsichtigtes Lösen vom Grundkörper (2) sichert.

## Beschreibung

Die vorliegende Erfindung betrifft eine Auflösewalze für eine Offenendspinnvorrichtung mit einem mit einer Antriebswelle fest verbundenen Grundkörper und mit einem mittels eines Drehverschlusses lösbar mit dem Grundkörper verbundenen Garniturträger. Der Drehverschluss weist mehrere Stellungen auf und ist durch Drehen des Garniturträgers relativ zu dem Grundkörper um eine gemeinsame Drehachse aus einer Entriegelungsstellung über eine Verbindungsstellung in eine Verriegelungsstellung und zurück überführbar. Der Drehverschluss umfasst zumindest eine Sicherungseinrichtung. Weiterhin betrifft die vorliegende Erfindung einen entsprechenden Garniturträger für eine Auflösewalze einer Offenendspinnvorrichtung, der zumindest einen Teil eines Drehverschlusses und zumindest einen Teil einer Sicherungseinrichtung aufweist.

Bei Auflösewalzen für Offenendspinnvorrichtungen ist es stets erforderlich, den Garniturträger lösbar mit dem Grundkörper zu verbinden, um bei einem Wechsel der Applikation oder auch bei Verschleiß die Garnitur schnell austauschen zu können. Dabei ist es erforderlich, für eine sichere Drehmomentübertragung von dem Grundkörper auf den Garniturträger zu sorgen, welche den Belastungen im Betrieb standhält. Ebenso muss dabei eine Spaltbildung in den Verbindungsbereichen zwischen Garniturträger und Grundkörper vermieden werden, um ein Einklemmen und Ansammeln von Fasern zu verhindern. Der Verbindung von Garniturträger und Grundkörper kommt daher eine erhebliche Bedeutung zu.

Im Stand der Technik sind bereits Auflösewalzen bekannt geworden, bei welchen der Garniturträger und der Grundkörper in axialer Richtung der Auflösewalze durch Schrauben miteinander verbunden sind. Die Drehmomentübertragung vom Grundkörper auf den Garniturträger hängt bei derartigen Auflösewalzen somit von der axialen Spannkraft ab. Bei ungenügender axialer Spannkraft kann es weiterhin auch zu einer Spaltbildung und einem Festsetzen von Fasern kommen.

Aus der EP 2 028 299 B1 ist eine Auflösewalze bekannt, bei welcher der Grundkörper und der Garniturträger in axialer Richtung durch eine Klippverbindung miteinander verbunden sind. Der Austausch des Garniturträgers bzw. der Garnitur kann dadurch in besonders einfacher Weise erfolgen. Um eine sichere Drehmomentübertragung zu gewährleisten, ist zusätzlich eine formschlüssige Verbindung zwischen dem Grundkörper und dem Garniturträger in Umfangsrichtung vorgesehen. Die Drehmomentübertragung ist bei dieser Ausführung zwar gesichert, die axiale Haltekraft ist jedoch aufgrund der axialen Klippverbindung vergleichsweise gering.

Die EP 2 617 882 A1 schlägt daher einen leicht lösbaren Drehverschluss zwischen dem Garniturträger und dem Grundkörper vor. Der Drehverschluss weist dabei eine Entriegelungsstellung auf, in welcher der Garniturträger und der Grundkörper in axialer Richtung ineinander geschoben werden können, jedoch doch nicht miteinander verbunden sind. Durch Drehen des Garniturträgers gegenüber dem Grundkörper wird der Drehverschluss in eine Verriegelungsstellung verbracht, in welcher der Garniturträger und der Grundkörper in Axialrichtung der Auflösewalze formschlüssig miteinander verbunden und gegeneinander verspannt sind, so dass der Garniturträger sicher auf dem Grundkörper befestigt ist. Beim Überführen des Drehverschlusses in die Verriegelungsstellung wird eine Verbindungsstellung durchlaufen, in welcher bereits eine lose Verbindung zwischen dem Garniturträger und dem Grundkörper besteht, die beiden Teile jedoch noch nicht miteinander verriegelt sind. Wird der Drehverschluss nicht vollständig in die Verriegelungsstellung überführt, so befindet sich der Drehverschluss noch in der Verbindungsstellung, in welcher die Gefahr besteht, dass sich im Betrieb der Auflösewalze der Garniturträger von dem Grundkörper löst.

Die DE 10 2013 103 035 A1 hat daher bereits einen Drehverschluss mit einer Sicherungseinrichtung vorgeschlagen, um ein unbeabsichtigtes Lösen des Garniturträgers vom Grundkörper zu vermeiden. Die Handhabung des Drehverschlusses ist jedoch aufgrund der Sicherungseinrichtung erschwert.

Aufgabe der vorliegenden Erfindung ist es daher, eine Auflösewalze mit einem Drehverschluss und einer Sicherungseinrichtung für den Drehverschluss vorzuschlagen, welche eine komfortable Handhabung ermöglicht. Weiterhin soll ein entsprechender Garniturträger vorgeschlagen werden.

Die Aufgabe wird gelöst mit den Merkmalen der unabhängigen Ansprüche.

Eine Auflösewalze für eine Offenendspinnvorrichtung weist einen mit einer Antriebswelle fest verbundenen Grundkörper und einen mittels eines Drehverschlusses lösbar mit dem Grundkörper verbundenen Garniturträger auf. Der Drehverschluss weist mehrere Stellungen auf und ist durch Drehen des Garniturträgers relativ zu dem Grundkörper um eine gemeinsame Drehachse aus einer Entriegelungsstellung über eine Verbindungsstellung in eine Verriegelungsstellung und zurück überführbar. Dabei umfasst der Drehverschluss zumindest eine Sicherungseinrichtung. Ein entsprechender Garniturträger für eine solche Auflösewalze weist wenigstens einen Teil eines mehrere Stellungen aufweisenden Drehverschlusses auf, mittels welchem der Garniturträger lösbar an einem mit einer Antriebswelle fest verbundenen Grundkörper der Auflösewalze befestigbar ist. Weiterhin weist der Garniturträger wenigstens einen Teil einer Sicherungseinrichtung auf.

Es ist bei dem Garniturträger nun vorgesehen, dass die Sicherungseinrichtung ein mit dem Garniturträger verbundenes Deckelelement beinhaltet, mittels welchem zumindest eine der Stellungen des Drehverschlusses anzeigbar ist und/oder mittels welchem der Garniturträger gegen unbeabsichtigtes Lösen vom Grundkörper sicherbar ist. Bei der Auflösewalze ist entsprechend vorgesehen, dass die Sicherungseinrichtung ein mit dem Garniturträger verbundenes Deckelelement beinhaltet, welches zumindest in der Verbindungsstellung die Stellung des Drehverschlusses anzeigt und/oder welches zumindest in der Verbindungsstellung den Garniturträger gegen unbeabsichtigtes Lösen vom Grundkörper sichert. Im Gegensatz zu bekannten Sicherungseinrichtungen des Standes der Technik, bei welchen die Sicherungseinrichtung Bestandteil des Drehverschlusses ist, wird nun vorgeschlagen, die Sicherungseinrichtung separat von dem Drehverschluss selbst bzw. den Verbindungs- und Verriegelungselementen des Drehverschlusses auszuführen und an einem Deckelelement des Garniturträgers anzuordnen. Die Sicherungsvorrichtung wirkt hierdurch völlig unabhängig von dem Drehverschluss, so dass die Handhabung des Drehverschlusses wesentlich erleichtert und die Gefahr einer Fehlbedienung vermindert wird. Da die Sicherungseinrichtung unabhängig von dem Drehverschluss arbeitet, kann diese zudem auch bei einem Verschleiß des Drehverschlusses nach längerer Betriebszeit die Verbindung zwischen dem Garniturträger und dem Grundkörper noch immer sichern.

Vorteilhaft ist es bei der Auflösewalze, wenn das Deckelelement zumindest in der Verbindungsstellung mit einem an dem Grundkörper angeordneten Teil des Drehverschlusses, insbesondere mit einer Blattfeder, und/oder mit einem Endbereich der Antriebswelle zusammenwirkt. Bei dem Garniturträger ist entsprechend das Deckelelement zum Zusammenwirken mit einem an dem Grundkörper angeordneten Teil des Drehverschlusses und/oder mit einem Endbereich der Antriebswelle der Auflösewalze ausgebildet. Das Deckelelement des Garniturträgers kann durch das Zusammenwirken mit dem am Grundkörper angeordneten Teil des Drehverschlusses beispielsweise in seiner Lage gegenüber dem Garniturträger verändert werden und dadurch die Stellungen des Drehverschlusses anzeigen. Vorzugsweise ist dazu das Deckelelement beweglich, insbesondere in einer axialen Richtung der Auflösewalze und/oder des Garniturträgers beweglich, an diesem angeordnet. Das Deckelelement kann beispielsweise mit einer oder mehreren Blattfedern zusammenwirken, welche an dem Grundkörper angeordnet sind und einen Teil des Drehverschlusses bilden. Alternativ oder zusätzlich kann das Zusammenwirken mit dem am Grundkörper angeordneten Teil des Drehverschlusses auch ein formschlüssiges Ineinandergreifen von Teilen des Deckelelements und Teilen des Grundkörpers beinhalten, um den Garniturträger auf dem Grundkörper zu sichern.

Besonders vorteilhaft ist es, wenn das Deckelelement auf seiner dem Garniturträger zugewandten Seite wenigstens ein Sicherungselement aufweist. Das wenigstens eine Sicherungselement kann beispielsweise zum formschlüssigen Zusammenwirken mit einem Teil des Grundkörpers ausgebildet sein. Alternativ oder zusätzlich kann das wenigstens eine Sicherungselement auch zum Zusammenwirken mit einem Teil des Drehverschlusses ausgebildet sein, um die Stellung, zumindest eine der Stellungen, des Drehverschlusses anzuzeigen.

Vorteilhaft ist es, wenn das wenigstens eine Sicherungselement als Fortsatz des Deckelelements ausgebildet ist, da das Deckelelement hierdurch in einfacher Weise gefertigt werden kann.

Nach einer ersten Ausführung des Deckelelements ist das wenigstens eine Sicherungselement als zylindrischer Fortsatz des Deckelelements ausgebildet ist. Ein Deckelelement mit einem solchen Fortsatz ist ebenfalls besonders einfach herzustellen.

Vorteilhaft ist es dabei, wenn der wenigstens eine Fortsatz eine Anlaufschräge aufweist. Die Anlaufschräge weist dabei einen von 90° und von 0° abweichenden Winkel zur Drehachse der Auflösewalze bzw. zur Drehachse des Garniturträgers auf. Die Anlaufschräge kann somit an einem Teil des Drehverschlusses am Grundkörper, insbesondere an einer Blattfeder, entlang gleiten und dadurch das Deckelelement relativ zu dem Garniturträger bewegen. Das Deckelelement ist somit in der Lage, zumindest eine der Stellungen des Drehverschlusses anzuzeigen.

Dabei ist es vorteilhaft, wenn das Deckelelement zum Anzeigen der Stellung des Drehverschlusses eine Farbkennzeichnung aufweist. Der Bediener kann somit einfach erkennen, ob der Garniturträger sicher auf dem Grundkörper befestigt ist bzw. ob der Drehverschluss korrekt in die Verriegelungsstellung überführt wurde oder sich noch in der Verbindungsstellung befindet.

Nach einer anderen Ausführung der Erfindung kann das wenigstens eine Sicherungselement in der Verbindungsstellung in eine Umfangsnut des Endbereichs der Antriebswelle eingreifen. Das Deckelelement sichert dadurch den Garniturträger in axialer Richtung der Auflösewalze auf dem Grundkörper bzw. auf der Antriebswelle.

Ebenso wäre es jedoch auch möglich, dass das Deckelelement und der Endbereich der Antriebswelle rein kraftschlüssig zusammenwirken. Beispielsweise umgreift das wenigstens eine Sicherungselement des Deckelelements in diesem Fall den Endbereich der Antriebswelle an seinem Außenumfang so eng, dass aufgrund der Reibungskraft zwischen dem Endbereich und dem Sicherungselement der Zusammenhalt der Bauteile der Auflösewalze gewährleistet ist.

Besonders vorteilhaft ist es jedoch, wenn das Sicherungselement des Deckelelements und der Endbereich der Antriebswelle, insbesondere eine Umfangsnut des Endbereichs, kombiniert formschlüssig und kraftschlüssig in Axialrichtung der Auflösewalze zusammenwirken. Eine solche Ausführung einer Sicherungseinrichtung ist mit einer komfortablen Betätigungskraft zu bedienen, wobei dennoch aufgrund des Formschlusses ein guter axialer Zusammenhalt bewirkt wird.

Greift das Sicherungselement zumindest in der Verbindungsstellung in eine Umfangsnut des Endbereichs der Antriebswelle ein, so ist es vorteilhaft, wenn das wenigstens eine Sicherungselement durch eine Bewegung des Garniturträgers in axialer Richtung der Auflösewalze in die Umfangsnut des Endbereichs einbringbar ist. Besonders vorteilhaft dabei ist es, dass beim Zusammensetzen des Garniturträgers mit dem Grundkörper in axialer Richtung automatisch und selbsttätig auch die Sicherungseinrichtung betätigt wird. Die Handhabung der Auflösewalze mit einer derartigen Sicherungseinrichtung ist daher besonders komfortabel und sicher. Die Gefahr einer Fehlbedienung ist hierbei erheblich reduziert.

Vorteilhaft ist es weiterhin, wenn das Deckelelement auf seiner dem Garniturträger zugewandten Seite mehrere, als Rasthaken ausgebildete, insbesondere einander gegenüberliegend oder kreisförmig um die Drehachse angeordnete, Sicherungselemente aufweist. Beim Zusammensetzen des Garniturträgers mit dem Grundkörper werden diese dabei zunächst selbsttätig über den Außenumfang des Endbereichs der Auflösewalze gestülpt, wobei anschließend durch das Einrasten der Rasthaken in die Umfangsnut des Endbereichs zugleich sichergestellt wird, dass der Drehverschluss korrekt verschlossen werden kann. Vorteilhaft dabei ist es auch, dass durch das Einrasten dem Bediener die erfolgreiche Betätigung der Sicherungseinrichtung signalisiert wird.

Um das Deckelelement mit dem Garniturträger zu verbinden, ist es weiterhin vorteilhaft, wenn das Deckelelement auf seiner dem Garniturträger zugewandten Seite mehrere Clipelemente aufweist. Das Deckelelement ist hierdurch sicher formschlüssig in den Garniturträger eingerastet und kann dennoch bei Bedarf leicht ausgetauscht werden, etwa wenn nach längerer Betriebszeit die Sicherungskraft der Sicherungselemente nachgelassen hat. Auf seiner dem Garniturträger bzw. der Garnitur abgewandten Seite zeigt das Deckelelement im Betrieb der Auflösewalze nach außen und ist hierdurch frei zugänglich.

Wirkt das Sicherungselement zumindest in der Verbindungsstellung mit einer Umfangsnut des Endbereichs der Antriebswelle zusammen, so ist es nach einer anderen vorteilhaften Ausführung vorteilhaft, wenn das wenigstens eine Sicherungselement durch eine Drehbewegung des Deckelelements in die Umfangsnut des Endbereichs einbringbar ist. Die Bedienung der Sicherungseinrichtung ist hierdurch wiederum besonders vorteilhaft, da das Montieren des Garniturträgers auf den Grundkörper mittels des Drehverschlusses und das Betätigen der Sicherungseinrichtung mittels einer Drehbewegung in einem Zug erfolgen kann.

Um das Sicherungselement durch eine Drehbewegung des Deckelelements zu betätigen, ist es vorteilhaft, wenn das Deckelelement drehbar, vorzugsweise begrenzt drehbar, mit dem Garniturträger verbunden ist. Das Sicherungselement kann hierdurch mittels einer kurzen Schwenkbewegung des Deckelelements gegenüber dem Garniturträger betätigt werden. Bei einer Auflösewalze, bei welcher die Antriebswelle einen Endbereich mit einer Umfangsnut aufweist, kann somit das wenigsten eine Sicherungselement durch eine Drehbewegung des Deckelelements in die Umfangsnut eingebracht werden.

Besonders vorteilhaft ist es dabei, wenn zumindest eines der Clipelemente in einer Kulisse des Garniturträgers geführt ist. Die Gefahr einer Fehlbedienung ist hierdurch weiter reduziert. Vorteilhaft dabei ist es weiterhin, wenn ein weiteres Clipelement den Drehpunkt bildet, um welchen das Deckelelement mittels des in der Kulisse geführten Clipelementes schwenkbeweglich geführt ist. Hierdurch wird eine exzentrische Schwenkbewegung des Deckelelements gegenüber dem Garniturträger erreicht, welche zusätzlich noch eine optische und haptische Rückmeldung darüber gibt, ob die Sicherungseinrichtung korrekt betätigt wurde.

Besonders vorteilhaft bei dieser Ausführung ist es daher, wenn das wenigstens eine Sicherungselement sichelförmig ausgebildet ist. Ein solches Sicherungselement ist mittels der vorbeschriebenen kurzen Schwenkbewegung des Deckelelements in einfacher Weise aus radialer Richtung in die Nut des Endbereichs der Antriebswelle einschwenkbar.

Weitere Vorteile der Erfindung werden anhand der nachfolgend dargestellten Ausführungsbeispiele beschrieben. Es zeigen:
- **Figur 1**: eine Auflösewalze mit einem Grundkörper und einem Garniturträger in zusammengebautem Zustand in einer schematischen Schnittdarstellung,
- **Figur 2**: eine perspektivische Darstellung eines Grundkörpers der Auflösewalze mit Verbindungselementen eines Drehverschlusses,
- **Figur 3**: eine perspektivische Darstellung eines Garniturträgers einer Auflösewalze mit Verriegelungselementen eines Drehverschlusses,
- **Figur 4**: eine schematische Schnittdarstellung des Drehverschlusses in einer Verriegelungsstellung,
- **Figur 5**: eine schematische Schnittdarstellung einer Auflösewalze mit einem zweiteiligen Garniturträger in zusammengebautem Zustand in einer Schnittdarstellung,
- **Figur 6**: eine perspektivische Detaildarstellung eines Deckelelements mit einem Sicherungselement,
- **Figur 7**: eine schematische Ansicht eines Garniturträgers mit einem Deckelelement sowie einer Kulisse für das Deckelelement,
- **Figur 8.**: eine perspektivische Detaildarstellung eines Deckelelements mit mehreren Sicherungselementen nach einer anderen Ausführung, sowie
- **Figur 9**: eine schematische Darstellung der Funktionsweise des Deckelelements der Figur 8.

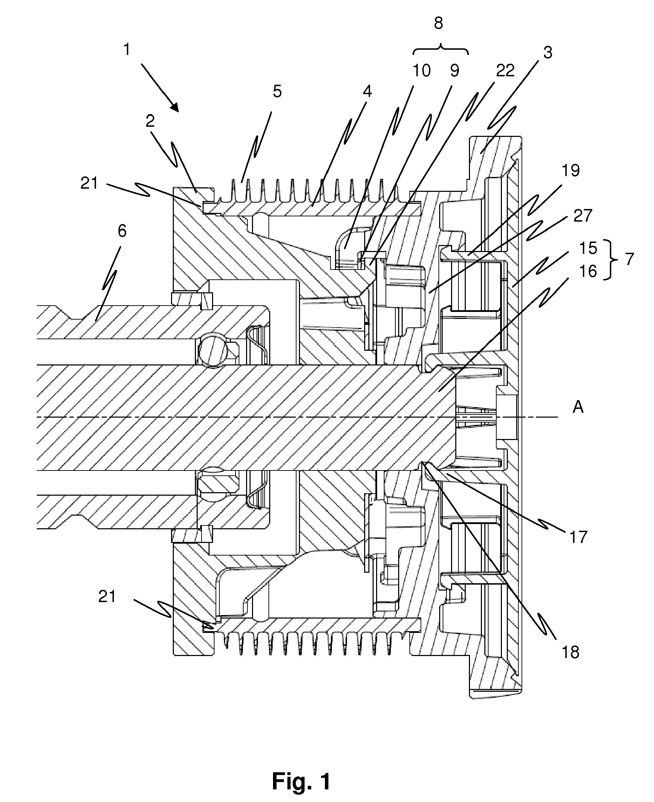

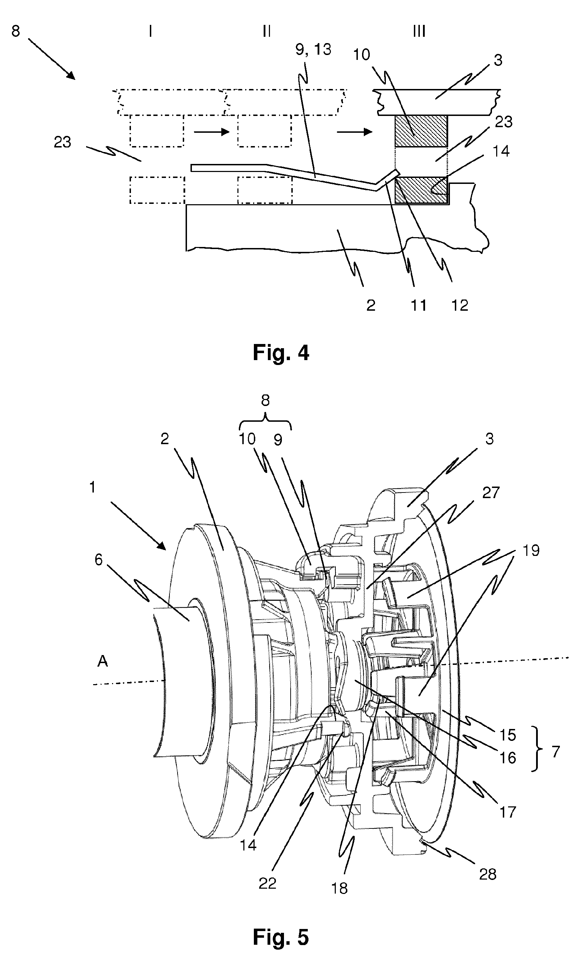

Figur 1 zeigt eine perspektivische Darstellung einer Auflösewalze 1, bei welcher ein Grundkörper 2 und ein Garniturträger 3 mittels eines Drehverschlusses 8 miteinander verbunden sind. Der Grundkörper 2 und der Garniturträger 3 sind vorliegend in betriebsbereitem Zustand gezeigt, in welchem der Drehverschluss 8 sich in seiner Verriegelungsstellung III (s. auch Fig. 4) befindet. Der Grundkörper 2 und der Garniturträger 3 sind um eine gemeinsame Drehachse A drehbar. Der Garniturträger 3 beinhaltet einen Garniturhalter 4, auf welchem wiederum die Garnitur 5 angeordnet ist. In vorliegendem Beispiel ist der Garniturhalter 4 einteilig mit dem Garniturträger 3 ausgebildet. Es ist jedoch ebenso möglich, den Garniturhalter 4 separat von dem Garniturträger 3 in Form eines Garniturringes auszubilden, wie in Fig. 5 dargestellt. Der Grundkörper 2 ist drehfest mit einer Antriebswelle 6 verbunden, welche wiederum in der Offenendspinnvorrichtung (nicht gezeigt) drehbar gelagert ist.

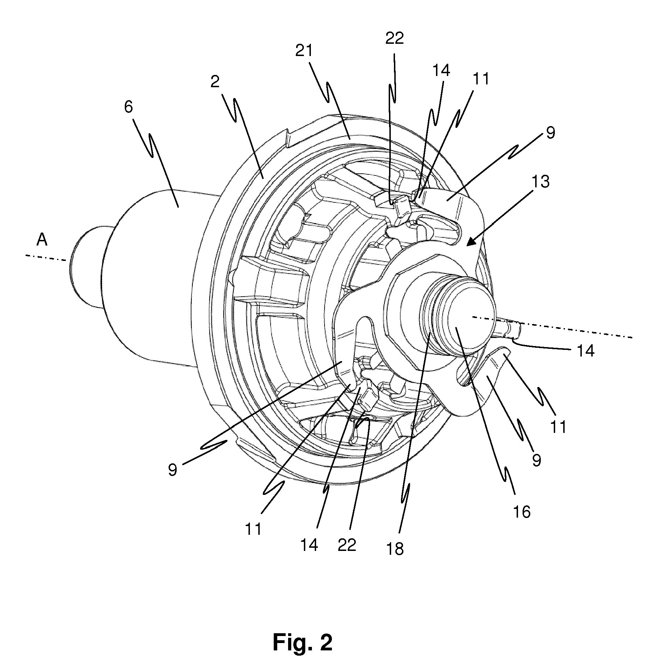

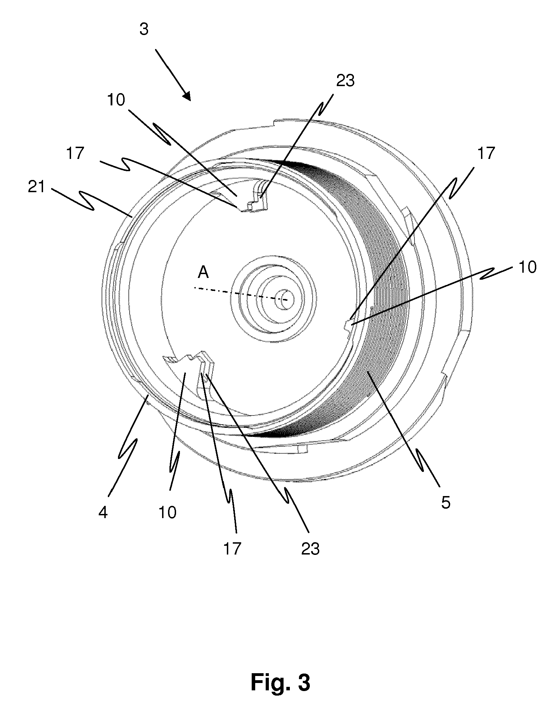

Um die Garnitur 5 bzw. den Garniturträger 3 schnell austauschen zu können, ist der Garniturträger 3 mit dem Grundkörper 2 mittels eines leicht lösbaren Drehverschlusses 8 verbunden. Ein solcher Austausch der Garnitur 5 bzw. des Garniturträgers 3 ist beispielsweise bei einem Wechsel der Applikation während des Betriebs der Offenendspinnvorrichtung oder auch bei Verschleiß der Garnitur 5 erforderlich. Der Drehverschluss 8 wird im vorliegenden Fall durch mehrere Verbindungselemente 9 des Grundkörpers 2 (dargestellt in Fig. 2) sowie mehrere Verriegelungselemente 10 des Garniturträgers 3 (dargestellt in Fig. 3) gebildet. Zum Befestigen des Garniturträgers 3 auf dem Grundkörper 2 können der Garniturträger 3 und der Grundkörper 2 in axialer Richtung, also in Richtung der Drehachse A der Auflösewalze 1, ineinander geschoben bzw. voneinander entfernt werden. Der Drehverschluss 8 muss sich hierfür in einer Entriegelungsstellung I (s. Fig. 4) befinden, in welcher das axiale Zusammenbringen bzw. axiale Auseinandernehmen von Grundkörper 2 und Garniturträger 3 möglich ist.

Nachdem der Grundkörper 2 und der Garniturträger 3 durch axiales Ineinanderschieben zusammengefügt wurden, kann der Drehverschluss 8 durch Drehen des Garniturträgers 3 relativ zu dem Grundkörper 2 aus der Entriegelungsstellung I über eine Verbindungsstellung II in die Verriegelungsstellung III (siehe Fig. 4) überführt werden, in welcher der Grundkörper 2 und der Garniturträger 3 nun in axialer Richtung der Auflösewalze 1 formschlüssig miteinander verbunden sind, so dass ein Lösen des Garniturträgers 3 von dem Grundkörper 2 ausgeschlossen ist. Die formschlüssige Verbindung in axialer Richtung kann zusätzlich in axialer Richtung verspannt sein, so dass sie kein axiales Spiel mehr aufweist. Zudem sind der Grundkörper 2 und der Garniturträger 3 durch den Drehverschluss 8 auch in Umfangsrichtung der Auflösewalze 1 miteinander verbunden, so dass ein Drehmoment von dem Grundkörper 2 auf den Garniturträger 3 übertragen werden kann. Der Grundkörper 2 und der Garniturträger 3 können hierzu lediglich in axialer Richtung miteinander verspannt sein, so dass ein Kraftschluss in Umfangsrichtung zwischen Reibflächen 21 des Grundkörpers und Reibflächen 21 des Garniturträgers 3 entsteht. Alternativ oder zusätzlich zu der kraftschlüssigen Verbindung in Umfangsrichtung kann jedoch auch eine formschlüssige Verbindung zwischen dem Grundkörper 2 und dem Garniturträger 3 in Umfangsrichtung vorgesehen sein, um das Drehmoment von dem Grundkörper auf den Garniturträger zu übertragen.

Weiter ist in Figur 1 eine erste Ausführung einer Sicherungseinrichtung 7 gezeigt, welche ein Deckelelement 15 mit mehreren Sicherungselementen 17 umfasst, die in eine Umfangsnut 18 eines Endbereichs 16 der Antriebswelle 6 eingreifen. Die genaue Funktionsweise der Sicherungseinrichtung 7 wird im Folgenden anhand der Fig. 5 erklärt.

Figur 2 zeigt eine perspektivische Ansicht des Grundkörpers 2, der als Teil des Drehverschlusses 8 wenigstens ein Verbindungselement 9 aufweist. Dargestellt ist in Figur 2 weiterhin die Antriebswelle 6, mit welcher der Grundkörper 2 fest verbunden ist, sowie ein axialer Anschlag 22 für ein Verriegelungselement 10 des Garniturträgers 3. In der vorliegenden Darstellung sind jeweils drei Verbindungselemente 9 sowie drei axiale Anschläge 22 gezeigt. Ebenso können jedoch mehr oder weniger Verbindungselemente 9 vorhanden sein. Vorliegend sind die Verbindungselemente 9 jeweils durch eine einzige Blattfeder 13 ausgebildet. Ebenso könnten die Verbindungselemente 9 jedoch auch durch einzelne Blattfedern 13 ausgebildet sein oder in anderer Weise ausgeführt sein.

Figur 3 zeigt eine perspektivische Darstellung eines Garniturträgers 3, welcher wiederum einteilig mit dem Garniturhalter 4 ausgebildet ist. Der Garniturträger 3 weist an seinem Innenumfang bzw. dem Innenumfang seines Garniturhalters 4 mehrere Verriegelungselemente 10 auf, welche zum Zusammenwirken mit den Verbindungselementen 9 des Grundkörpers 2 ausgebildet sind. Die Verriegelungselemente 10 weisen vorliegend jeweils Öffnung 23 zum Zusammenwirken mit den Verbindungselementen 9 des Grundkörpers 2 auf. Vorliegend sind wiederum drei Verriegelungselemente10 gezeigt. Ebenso kann jedoch auch eine andere Anzahl von Verriegelungselementen 10 vorhanden sein.

Die Funktionsweise des Drehverschlusses wird nun anhand von Figur 4 erläutert. Wie der schematischen Darstellung entnehmbar, weist der Drehverschluss 8 eine Entriegelungsstellung I (strichpunktiert dargestellt) auf. In dieser können der Garniturträger 3 und der Grundkörper 2 problemlos in axialer Richtung ineinandergefügt bzw. in axialer Richtung voneinander entfernt werden, da die Verbindungselemente 9 und die Verriegelungselemente 10 in der Entriegelungsstellung I nicht aufeinandertreffen. Nachdem der Garniturträger 3 mit den Verriegelungselementen 10 in axialer Richtung auf den Grundkörper 2 gesetzt wurde, kann nun der Garniturträger 3 relativ zu dem Grundkörper 2 verdreht werden, wie durch die Pfeile symbolisiert. Die Verbindungselemente 9, in vorliegender Darstellung gebildet durch die Blattfeder 13, gelangen hierdurch in die Öffnung 23 der Verriegelungselemente 10. Der Drehverschluss 8 befindet sich nun in der Verbindungsstellung II, in welcher in axialer Richtung eine lose Verbindung zwischen dem Grundkörper 2 und dem Garniturträger 3 besteht. In dieser Verbindungsstellung II besteht jedoch noch keine drehmomentübertragende Verbindung in Umfangsrichtung. In der Verbindungsstellung II besteht jederzeit die Gefahr, dass der Garniturträger 3 sich gegenüber dem Grundkörper 2 verdreht und hierdurch wieder in die Entriegelungsstellung I rutscht. Erst wenn der Drehverschluss 8 weiter über die Verbindungsstellung II hinaus in die Verriegelungsstellung III gedreht wird, liegt eine sichere Verbindung des Garniturträgers 3 mit dem Grundkörper 2 vor, da die Verbindung verriegelt ist. Hierzu ist nach vorliegender Darstellung das Verbindungselement 9 mit einem Rastelement 11 versehen, welches mit einer Rastkante 12 des Verriegelungselements 10 zusammenwirkt. Das Rastelement 11 drückt dabei das Verriegelungselement 10 gegen einen Umfangsanschlag 14 des Grundkörpers 2. Die Verbindung kann jedoch auch ohne ein solches Rastelement 11 lediglich durch axiale Verspannung verriegelt sein, was beispielsweise durch eine entsprechende Formgebung der Blattfeder 13 oder der Blattfedern 13 möglich ist. Denkbar ist jedoch auch eine axiale Verspannung durch ein zusätzliches Federelement, wenn beispielsweise die Verbindungselemente 9 nicht als Blattfeder 13 ausgeführt sind.

Um nun zu verhindern, dass die Auflösewalze 1 in Betrieb genommen wird, obwohl der Drehverschluss 8 nicht korrekt verriegelt ist und sich lediglich in der Verbindungsstellung II befindet, ist die Sicherungseinrichtung 7 vorgesehen. Diese muss zumindest in der Verbindungsstellung II die Stellung des Drehverschluss 8 anzeigen, so dass dem Bedienpersonal die nicht korrekte Verriegelung angezeigt wird. Natürlich ist es vorteilhaft, wenn die Sicherungseinrichtung 7 die Stellung des Drehverschlusses 8 auch in der Verriegelungsstellung III anzeigt. Nach einer anderen Ausführung der Sicherungseinrichtung 7 muss diese den Garniturträger 3 zumindest in der Verbindungsstellung II in axialer Richtung auf dem Grundkörper 2 sichern. Die Sicherungseinrichtung 7 verhindert somit, dass sich der Drehverschluss aus der Verbindungsstellung II unbeabsichtigt in die Entriegelungsstellung I bewegt, wodurch der Garniturträger 3 sich unkontrolliert von dem Grundkörper 2 lösen könnte. Dabei ist es vorteilhaft, wenn die Sicherungseinrichtung 7 den Garniturträger 3 auch in der Verriegelungsstellung III sichert, da bei vorzeitigem Verschleiß oder Materialermüdung der Verbindungselemente 9 oder der Verriegelungselemente 10 eine sichere Verriegelung unter Umständen nicht mehr gegeben ist.

Figur 5 zeigt eine erste Ausführung einer solchen Sicherungseinrichtung 7 in einer geschnittenen Darstellung. Erkennbar sind wiederum der Grundkörper 2 sowie der Garniturträger 3 der Auflösewalze 1, welcher im Unterschied zu dem der Fig. 1 zweiteilig mit einem separaten, als Garniturring ausgeführten Garniturhalter 4 ausgeführt ist. Der Garniturring bzw. Garniturhalter 4 ist in vorliegender Darstellung jedoch nicht gezeigt. Im Übrigen entsprechen die Bauteile der Auflösewalze 1 mit dem Drehverschluss 8 sowie den Verbindungselementen 9 und den Verriegelungselementen 10 denen der Fig. 1, so dass deren Funktionsweise hier nicht mehr gesondert beschrieben wird.

Die Sicherungseinrichtung 7 beinhaltet ein Deckelelement 15, welches vorliegend über mehrere Clipelemente 19 mit dem Garniturträger 3 verbunden ist. Auf seiner dem Garniturträger 3 zugewandten Seite weist das Deckelelement 15 weiterhin mehrere Sicherungselemente 17 auf, die vorliegend als Rasthaken ausgebildet sind. Dabei sind die Sicherungselemente 17 kreisförmig um die Drehachse A der Auflösewalze 1 bzw. des Garniturträgers 3 angeordnet, so dass diese den Endbereich 16 der Antriebswelle 6, der sich durch den Grundkörper 2 hindurch erstreckt, umgreifen können. Der Endbereich 16 der Antriebswelle 6 weist eine Umfangsnut 18 auf, in welche die Rasthaken bzw. Sicherungselemente 17 des Deckelelements 15 eingreifen, um die Sicherungseinrichtung 7 zu bilden.

Da die Rasthaken bzw. Sicherungselemente 17 in radialer Richtung des Deckelelements 15 federnd nachgiebig ausgeführt sind, wird die Sicherungseinrichtung 7 beim axialen Ineinanderbringen von Grundkörper 2 und Garniturträger 3 in der Entriegelungsstellung I des Drehverschlusses 8 zwangsläufig und automatisch mitbetätigt. Die Sicherungselemente 17 sind somit in einfacher Weise durch eine Bewegung des Garniturträgers 3 in axialer Richtung in die Umfangsnut 18 des Endbereichs 16 einbringbar. Die Umfangsnut 18 ist dabei vorzugsweise nicht als rechteckige Nut ausgeführt, sondern konisch mit ansteigenden Nutflanken, so dass das Lösen der Sicherungseinrichtung 7 vergleichsweise leicht möglich ist. Vorzugsweise sind die Nutflanken der Umfangsnut 18 dabei derart steil ausgeführt, dass die Sicherungseinrichtung 7 einem Lösen des Garniturträgers 3 von dem Grundkörper 2 durch die Schwerkraft entgegenwirkt. Erst bei Aufbringen einer deutlich höheren Betätigungskraft ist ein Herausrutschen der Rasthaken bzw. der Sicherungselemente 17 aus der Umfangsnut 18 möglich, um die Verbindung zu lösen. Die Funktionsweise der Sicherungseinrichtung 7 der Fig. 1 ist identisch mit der der hier beschriebenen.

Vorteilhaft bei dieser Sicherungseinrichtung 7 ist es, dass die Sicherungseinrichtung 7 den Garniturträger 3 nicht nur in der Verbindungsstellung II, sondern auch in der Verriegelungsstellung III auf dem Grundkörper 2 fixiert. Wird der Drehverschluss 8 aus der Verriegelungsstellung III über die Verbindungsstellung II wiederum in die Entriegelungsstellung I verbracht, so ist die Sicherungseinrichtung 7 noch immer aktiv, da die Sicherungselemente 17 noch immer mit der Umfangsnut 18 in Eingriff stehen. Es ist somit eine definierte axiale Kraft erforderlich, um den Garniturträger 3 von dem Grundkörper 2 abzuziehen. Ein unbeabsichtigtes Lösen des Garniturträgers 3 von dem Grundkörper 2 kann somit bei der beschriebenen Sicherungseinrichtung 7 nahezu vollständig ausgeschlossen werden. Besonders vorteilhaft bei dieser Sicherungseinrichtung 7 ist es auch, diese durch das Einrasten der Rasthaken bzw. Sicherungselemente 17 in die Umfangsnut 18 die erfolgreiche Betätigung der Sicherungseinrichtung 7 signalisiert. Eine Fehlbedienung ist daher ebenfalls nahezu ausgeschlossen.

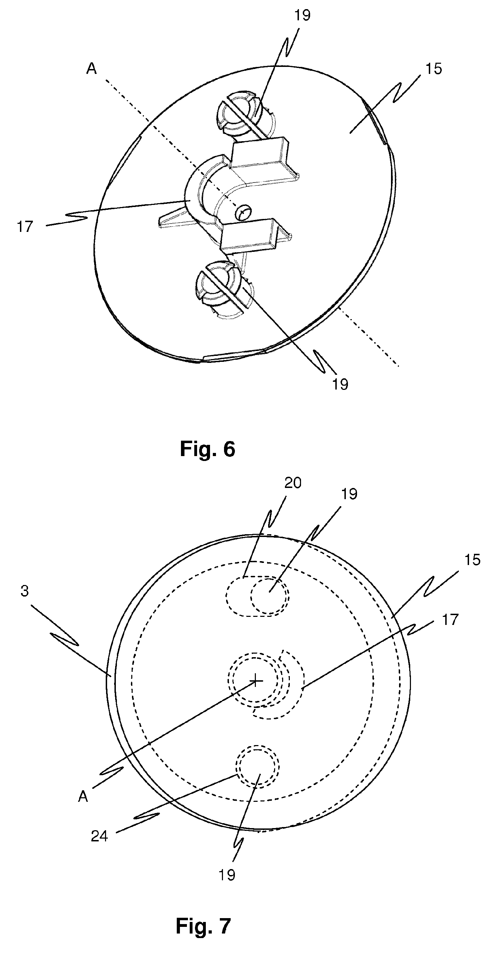

Die Figuren 6 und 7 zeigen eine andere Ausführung der Erfindung, bei welcher das Sicherungselement 17 nicht durch eine axiale Bewegung, sondern durch eine Drehbewegung des Deckelelements 15 in die Umfangsnut 18 des Endbereichs 16 einschwenkbar ist. Das Deckelelement 15 ist ebenfalls auf seiner dem Garniturträger 3 zugeordneten Seite mit Clipelementen 19 versehen, mittels welchen es mit dem Garniturträger 3, der in Fig. 7 dargestellt ist, verbunden ist. Außerdem weist das Deckelelement 15 auf seiner dem Garniturträger 3 zugewandten Seite ein Sicherungselement 17 auf, das vorliegend sichelförmig ausgebildet ist.

Figur 7 zeigt eine Ansicht auf den Garniturträger 3 auf seiner dem Grundkörper 2 und dem Garniturhalter 4 abgewandten Seite, welche im Betrieb der Auflösewalze 1 nach außen zeigt und in welche das Deckelelement 15 einsetzbar ist. Der Garniturträger 3 weist hierzu eine Rastöffnung 24 auf, in welche eines der Cliplemente 19 einclipbar ist. Weiterhin weist der Garniturträger 3 eine Kulisse 20 auf, in welche ein weiteres Clipelement 19 in axialer Richtung des Garniturträgers 3 bzw. der Auflösewalze 1 einclipbar ist und dabei begrenzt drehbar um die erste Öffnung 23 geführt ist. Es ist somit möglich, das in den Garniturträger 3 eingesetzte Deckelelement 15 um einen geringen Winkel gegenüber dem Garniturträger 3 zu verschwenken. Die Sicherungseinrichtung 7 ist vorliegend in einer entsicherten Stellung gezeigt, in der das Sicherungselement 17 nicht mit der Umfangsnut 18 des Endbereichs 16 in Eingriff steht.

Ist nun wiederum der Garniturträger 3 mit dem mit ihm verbundenen Deckelelement 15 in axialer Richtung bereits mit dem Grundkörper 2 verbunden, so kann in gewohnter Weise der Drehverschluss 8 betätigt werden. Dabei wird zugleich eine kleine Schwenkbewegung des Deckelelements 15 durchgeführt, so dass das sichelförmige Sicherungselement 17 in die Umfangsnut 18 eingeschwenkt wird, so dass es wiederum eine formschlüssige Verbindung in axialer Richtung der Auflösewalze 1 mit der Antriebswelle 6 herstellt.

Die Umfangsnut 18 ist hierzu bevorzugt als Rechtecknut ausgebildet, so dass nach Einschwenken des Sicherungselements 17 ein besonders sicherer Formschluss in axialer Richtung hergestellt ist, der auch bei Aufbringen einer größeren axialen Betätigungskraft nicht lösbar ist. Eine solche Sicherungseinrichtung 7 ist wiederum sowohl für einen einteiligen Garniturträger 3 als auch für einen zweiteiligen Garniturträger 3 mit einem separaten Garniturhalter 4 möglich.

Besonders vorteilhaft bei dieser Ausführungsform der Sicherungseinrichtung 7 ist es, dass auch hier zur Betätigung der Sicherungseinrichtung 7 keine gesonderte Bewegung erforderlich ist, sondern das Verschwenken des Deckelelements 15 in einer Bewegung mit der Betätigung des Drehverschlusses 8 erfolgen kann. Da weiterhin das Deckelelement 15 mittels eines der Clipelemente 19 exzentrisch bezüglich der Drehachse A an dem Garniturträger gelagert ist, ist weiterhin eine vorteilhafte Kontrolle der Sicherungseinrichtung 7 möglich. Ist das sichelförmige Sicherungselement 17 wie in Fig. 7 gezeigt außer Eingriff mit der Umfangsnut 18, so steht das Deckelelement 15 seitlich über den Garniturträger 3 über, wie in Figur 7 dargestellt. Eine Montage der Auflösewalze 1 in die Offenendspinnvorrichtung ist daher aufgrund der engen Abmessungen bei überstehendem Deckelelement 15 nicht möglich. Zugleich kann der Bediener sowohl optisch als auch haptisch unmittelbar erkennen, dass das Deckelelement 15 radial über den Garniturträger 3 übersteht und somit die Sicherungseinrichtung 7 nicht betätigt ist. Erst nach Verschwenken des Deckelelements 15, wobei zugleich die Sicherungseinrichtung 7 betätigt wird, ist eine Montage der Auflösewalze 1 in die Offenendspinnvorrichtung möglich. Vorteilhaft ist es auch hier, dass die Sicherungseinrichtung 7 den Garniturträger 3 auch in der Verriegelungsstellung III des Drehverschlusses 8 auf dem Grundkörper 2 fixiert, so dass der Garniturträger 3 auch bei Verschleiß des Drehverschlusses 8 sicher auf dem Grundkörper 2 gehalten ist.

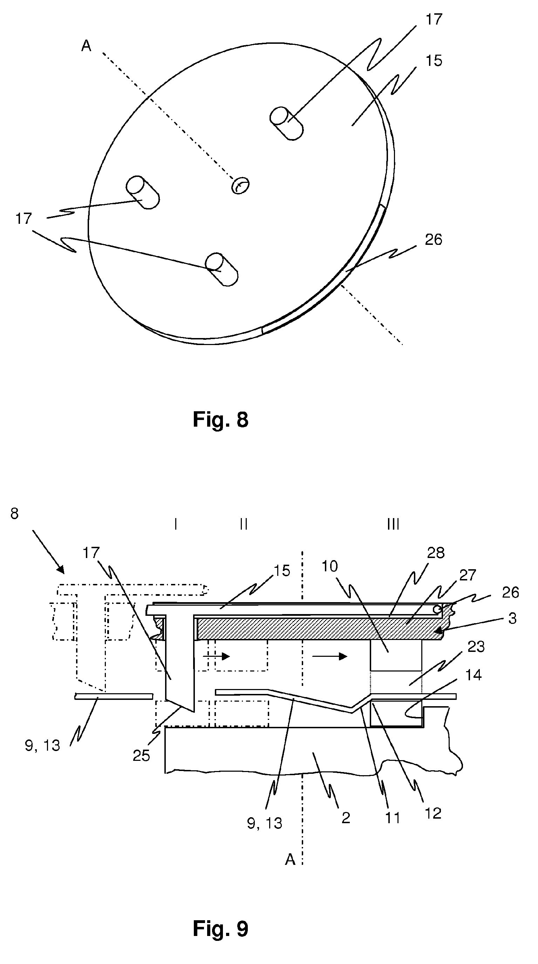

Die Figuren 8 und 9 zeigen eine weitere Ausführung der Erfindung, bei welcher die Sicherungseinrichtung 7 die Stellung des Drehverschlusses 8 lediglich anzeigt, jedoch den Garniturträger 3 nicht auf dem Grundkörper 2 sichert. Das Deckelelement 15 kann dazu bezogen auf die axiale Richtung (Richtung der Drehachse A) des Garniturträgers 3 zwei verschiedene Stellungen gegenüber diesem einnehmen.

Figur 8 zeigt eine perspektivische Ansicht eines Deckelelements 15 mit Teilen einer Sicherungseinrichtung 7. Die Sicherungseinrichtung 7 umfasst ebenfalls ein Deckelelement 15, das auf seiner dem Garniturträger 3 zugewandten Seite mehrere Sicherungselemente 17 aufweist, die vorliegend als zylindrische Fortsätze des Deckelelements 15 ausgebildet sind. Vorliegend sind dabei 3 Sicherungselemente 17 gleichmäßig um den Umfang des Deckelelements 15 verteilt, es können jedoch, insbesondere je nach Ausführung und Anzahl der Verriegelungselemente 9 bzw. der Verbindungselemente 10 auch mehr oder weniger Sicherungselemente 17 angeordnet sein. Die Sicherungselemente 17 sind derart ausgebildet, dass sie mit an dem Grundkörper 2 angeordneten Teilen des Drehverschlusses 8 zusammenwirken können und dadurch die Stellung des Deckelelements 15 gegenüber dem Garniturträger 3 bzw. auch gegenüber dem Grundkörper 2 verändern können, wenn der Drehverschluss 8 betätigt wird. Die veränderte Stellung des Deckelelements15 ist dabei leicht für das Bedienpersonal erkennbar und signalisiert diesem, in welcher der Stellungen - Verbindungsstellung II oder Verriegelungsstellung III - sich der Drehverschluss 8 befindet. Das vorliegende Deckelelement 15 weist hierzu noch eine Farbkennzeichnung 26 auf, welches in der Verbindungsstellung II sichtbar ist und somit die Stellung des Drehverschlusses 8 in der Verbindungsstellung II anzeigt.

Figur 9 zeigt eine schematische und teilweise geschnittene Darstellung des Drehverschlusses 8 sowie einer Sicherungseinrichtung 7, wie sie in Fig. 8 gezeigt ist. Die grundsätzliche Funktionsweise des Drehverschlusses 8 entspricht der der Figur 4, so dass auf diese nicht mehr näher eingegangen wird. Zusätzlich zu dem Verriegelungselement 10 und dem Verbindungselement 9 ist in abgebrochener Darstellung noch das Deckelelement 15 dargestellt, von dem vorliegend ein Sicherungselement 17 in Form eines zylindrischen Fortsatzes gezeigt ist. Das Sicherungselement 17 weist zum Zusammenwirken mit der Blattfeder 13 eine Anlaufschräge 25 auf. Das Deckelelement 15 ist zentrisch um die Drehachse A an dem Garniturträger 3 angeordnet und ist, ähnlich wie das in den Figuren 1 und 5 gezeigte, beispielsweise mittels Clipelementen 19 (hier nicht dargestellt) an dem Garniturträger 3 befestigbar. Weiterhin durchgreift das Deckelelement 15 mit seinen Sicherungselementen 17 eine axiale Stirnwand 27 des Garniturträgers 3.

Wie zu Figur 4 bereits beschrieben, kann in der Entriegelungsstellung I der Garniturträger 3 in axialer Richtung auf den Grundkörper 2 gesetzt werden (linke, strichpunktierte Darstellung des Verriegelungselements 10). Das vorliegend gezeigte Verriegelungselement 10 kann dazu in eine Lücke zwischen zwei nebeneinander liegende Verbindungselemente 9 eingebracht werden. Das wenigstens eine Sicherungselement 17, das dem gezeigten Verriegelungselement 10 zugeordnet ist, steht in dieser Stellung auf einem benachbarten Verbindungselement 9 auf. Das Deckelelement 15 steht daher in axialer Richtung (Richtung der Drehachse A) über den Garniturträger 3 über, was durch den Bediener leicht erkannt werden kann. Zusätzlich kann an dem Deckelelement 15 noch eine Farbkennzeichnung 26 vorgesehen sein, welche das Hervorstehen des Deckelelements 15 signalisiert und damit anzeigt, dass der Drehverschluss 8 sich lediglich in der Verbindungsstellung II oder ggf. sogar noch in der Entriegelungsstellung I befindet. Vorliegend ist die Farbkennzeichnung 26 durch einen farbigen Dichtring gebildet.

Wird nun der Drehverschluss 8 aus der Entriegelungsstellung I über die Verbindungsstellung II in die Verriegelungsstellung III gedreht, wie zu Figur 4 bereits im Detail beschrieben, so gleitet das Sicherungselement 17 auf dem benachbarten Verbindungselement 9 bzw. der benachbarten Blattfeder 13 entlang, bis es in die Lücke zwischen den beiden gezeigten Verbindungselementen 9 gelangt. Der Drehverschluss 8 befindet sich nun zwar in der Verriegelungsstellung III, das Deckelelement 15 steht jedoch noch immer über. Der Bediener kann nun das Deckelelement 15 durch leichten Druck in axialer Richtung in eine Vertiefung 28 des Garniturträgers 3 drücken, so dass das Deckelelement 15 nicht mehr übersteht und die Farbkennzeichnung 26 ebenfalls verdeckt ist.

Das Herunterdrücken des Deckelelements 15 in die Vertiefung 28 ist aufgrund des Aufsitzens des Sicherungselements 17 auf dem Verbindungselement 9 (oder ggf. auch einem anderen Teil des Drehverschlusses 8 bzw. des Grundkörpers 2) nur in der Verriegelungsstellung III möglich, so dass das eingedrückte Deckelelement 15 und ggf. die verschwundene Farbkennzeichnung 26 den korrekten Verschluss des Drehverschlusses 8 in der Verriegelungsstellung III zuverlässig anzeigt. Zum Öffnen des Drehverschlusses 8 muss der Garniturträger 3 lediglich in der entgegengesetzten Richtung gegenüber dem Grundkörper 2 verdreht werden, so dass die Verriegelungselemente 10 außer Eingriff mit den Verbindungselementen 9 geraten. Das Sicherungselement 17 gelangt dabei aufgrund der Anlaufschräge 25 aus der Lücke zwischen den beiden Verbindungselementen 9, bis es wieder auf dem benachbarten Verbindungselement 9 aufsteht.

Die Erfindung ist nicht auf die dargestellten Ausführungsbeispiele beschränkt. Die gezeigte Sicherungseinrichtung 7 ist nicht nur in Verbindung mit dem dargestellten Drehverschluss vorteilhaft, sondern kann auch in Verbindung mit jedem anderen Drehverschluss eingesetzt werden. Weitere Abwandlungen und Kombinationen im Rahmen der Patentansprüche fallen ebenfalls unter die Erfindung.

### Bezugszeichenliste

- 1: Auflösewalze
- 2: Grundkörper
- 3: Garniturträger
- 4: Garniturhalter
- 5: Garnitur
- 6: Antriebswelle
- 7: Sicherungseinrichtung
- 8: Drehverschluss
- 9: Verbindungselement
- 10: Verriegelungselement
- 11: Rastelement
- 12: Rastkante
- 13: Blattfeder
- 14: Umfangsanschlag
- 15: Deckelelement
- 16: Endbereich der Antriebswelle
- 17: Sicherungselement
- 18: Umfangsnut
- 19: Clipelement
- 20: Kulisse
- 21: Reibflächen
- 22: axialer Anschlag
- 23: Öffnung
- 24: Rastöffnung
- 25: Anlaufschräge
- 26: Farbkennzeichnung
- 27: axiale Stirnfläche
- 28: Vertiefung
- A: Drehachse
- I: Entriegelungsstellung
- II: Verbindungsstellung
- III: Verriegelungsstellung

## Patentansprüche

1. Garniturträger (3) für eine Auflösewalze (1) einer Offenendspinnvorrichtung mit wenigstens einem Teil eines mehrere Stellungen aufweisenden Drehverschlusses (8), mittels welchem der Garniturträger (3) lösbar an einem mit einer Antriebswelle (6) fest verbundenen Grundkörper (2) der Auflösewalze (1) befestigbar ist, und mit wenigstens einem Teil einer Sicherungseinrichtung (7), **dadurch gekennzeichnet, dass** die Sicherungseinrichtung (7) ein mit dem Garniturträger (3) verbundenes Deckelelement (15) beinhaltet, mittels welchem zumindest eine der Stellungen des Drehverschlusses (8) anzeigbar ist und/oder mittels welchem der Garniturträger (3) gegen unbeabsichtigtes Lösen vom Grundkörper (2) sicherbar ist.

2. Garniturträger nach dem vorherigen Anspruch, **dadurch gekennzeichnet, dass** das Deckelelement (15) zum Zusammenwirken mit einem an dem Grundkörper (2) angeordneten Teil des Drehverschlusses (8) und/oder mit einem Endbereich (16) der Antriebswelle (6) der Auflösewalze (1) ausgebildet ist.

3. Garniturträger nach einem der beiden vorherigen Ansprüche, **dadurch gekennzeichnet, dass** das Deckelelement (15) auf seiner dem Garniturträger (3) zugewandten Seite wenigstens ein Sicherungselement (17) aufweist.

4. Garniturträger nach dem vorherigen Anspruch, **dadurch gekennzeichnet, dass** das wenigstens eine Sicherungselement (17) als Fortsatz des Deckelelements (15), insbesondere als zylindrischer Fortsatz des Deckelelements (15), ausgebildet ist.

5. Garniturträger nach dem vorherigen Anspruch, **dadurch gekennzeichnet, dass** der wenigstens eine Fortsatz eine Anlaufschräge (25) aufweist.

6. Garniturträger nach einem der beiden vorherigen Ansprüche, **dadurch gekennzeichnet, dass** das Deckelelement (15) zum Anzeigen der Stellung des Drehverschlusses (8) eine Farbkennzeichnung (26) aufweist.

7. Garniturträger nach einem der Ansprüche 3 oder 4, **dadurch gekennzeichnet, dass** das Deckelelement (15) auf seiner dem Garniturträger (3) zugewandten Seite mehrere als Rasthaken ausgebildete, insbesondere einander gegenüberliegend oder kreisförmig um die Drehachse (A) angeordnete, Sicherungselemente (17) aufweist.

8. Garniturträger nach einem der Ansprüche 3 oder 4, **dadurch gekennzeichnet, dass** das Deckelelement (15) drehbar, vorzugsweise begrenzt drehbar, mit dem Garniturträger (3) verbunden ist und dass das wenigstens eine Sicherungselement (17) durch eine Drehbewegung des Deckelelements (15) gegenüber dem Garniturträger (3) betätigbar ist, wobei vorzugsweise das Sicherungselement (17) sichelförmig ausgebildet ist.

9. Auflösewalze (1) für eine Offenendspinnvorrichtung mit einem mit einer Antriebswelle (6) fest verbundenen Grundkörper (2) und mit einem mittels eines Drehverschlusses (8) lösbar mit dem Grundkörper (2) verbundenen Garniturträger (3), wobei der Drehverschluss (8) mehrere Stellungen aufweist und durch Drehen des Garniturträgers (3) relativ zu dem Grundkörper (2) um eine gemeinsame Drehachse (A) aus einer Entriegelungsstellung (I) über eine Verbindungsstellung (II) in eine Verriegelungsstellung (III) und zurück überführbar ist, wobei der Drehverschluss (8) zumindest eine Sicherungseinrichtung (7) umfasst, **dadurch gekennzeichnet, dass** die Sicherungseinrichtung (7) ein mit dem Garniturträger (3) verbundenes Deckelelement (15) beinhaltet, welches zumindest in der Verbindungsstellung (II) die Stellung des Drehverschlusses (8) anzeigt und/oder welches zumindest in der Verbindungsstellung (II) den Garniturträger (3) gegen unbeabsichtigtes Lösen vom Grundkörper (2) sichert.

10. Auflösewalze nach dem vorherigen Anspruch, **dadurch gekennzeichnet, dass** das Deckelelement (15) zumindest in der Verbindungsstellung (II) mit einem an dem Grundkörper (2) angeordneten Teil des Drehverschlusses (8), insbesondere mit einer Blattfeder (13), und/oder mit einem Endbereich (16) der Antriebswelle (6) zusammenwirkt.

11. Auflösewalze nach einem der beiden vorherigen Ansprüche, **dadurch gekennzeichnet, dass** das Deckelelement (15) auf seiner dem Garniturträger (3) zugewandten Seite wenigstens ein Sicherungselement (17) aufweist.

12. Auflösewalze nach einem oder mehreren der vorherigen Ansprüche 9 -11, **dadurch gekennzeichnet, dass** das Deckelelement (15) den Garniturträger (3) in axialer Richtung der Auflösewalze (1) auf der Antriebswelle (6) sichert, wobei das wenigstens eine Sicherungselement (17) zumindest in der Verbindungsstellung (II) in eine Umfangsnut (18) des Endbereichs (16) eingreift.

13. Auflösewalze nach einem oder mehreren der vorherigen Ansprüche 9 - 12, **dadurch gekennzeichnet, dass** das wenigstens eine Sicherungselement (17) durch eine Bewegung des Garniturträgers (3) in axialer Richtung der Auflösewalze (1) in die Umfangsnut (18) des Endbereichs (16) einbringbar ist.

14. Auflösewalze nach einem oder mehreren der vorherigen Ansprüche 9 - 13, **dadurch gekennzeichnet, dass** das Deckelelement (15) auf seiner dem Garniturträger (3) zugewandten Seite mehrere als Rasthaken ausgebildete, insbesondere einander gegenüberliegend oder kreisförmig um die Drehachse (A) angeordnete, Sicherungselemente (17) aufweist.

15. Auflösewalze nach einem oder mehreren der Ansprüche 9 - 12, **dadurch gekennzeichnet, dass** das Deckelelement (15) drehbar, vorzugsweise begrenzt drehbar, mit dem Garniturträger (3) verbunden ist, und dass das wenigstens eine Sicherungselement (17) durch eine Drehbewegung des Deckelelements (15) in die Umfangsnut (18) des Endbereichs (16) einbringbar ist, wobei vorzugsweise das wenigstens eine Sicherungselement (17) sichelförmig ausgebildet ist.

16. Auflösewalze nach einem oder mehreren der Ansprüche 9 - 15 und mit einem Garniturträger gemäß einem oder mehreren der Ansprüche 1 - 8.
